# EUROPEAN PATENT APPLICATION

(11) **EP 1 764 603 A1**
(43) Date of publication of application: **21.03.2007**
(21) Application number: 05077142.7
(22) Date of filing: 20.09.2005
(51) Int. Cl.: G01N 1/00, G01N 33/00, G01N 30/20

(54) **Sampler system**

(71) Applicant: AC Analytical Controls Holding B.V., 3047 AG Rotterdam (NL)
(72) Inventor: Kruis, René AC Analytical Controls B.V., 3047 AG Rotterdam (NL)
(74) Representative: Winckels, Johannes Hubertus F.

(57) **Abstract**

A sampler system for sampling a volatile substance. The sample system comprises: a sample container. The sample container comprises an inlet for influx of a sample of the volatile substance into the sample container and an outlet for outflux of the sample substance from the sample container into a sample analyzer. A vacuum system is coupled to the sample container for providing a vacuum pressure in the sample container. A pressure system is connectable to the sampler container for conveying the sample substance to the sample analyzer and a selector switch is present for switching the sample container alternatingly between the inlet and the vacuum system or between the pressure system and the sample analyzer. According to the invention the sampler system is comprised with a dosing system for providing a predetermined adjustable dose level of sample substance in the sample container.

## Description

The invention relates to a sampler system. More particular, the invention relates to a sampler system comprising a sample container that is switchingly connectable between a volatile substance to be sampled, for example, contained in a substance container, and a sample analyzing system, typically a gas chromatograph analyzing system.

The sample container is in the art known as "sample loop" and comprises generally a small tube which can be filled with a substance to be analyzed. The sample loop is switched between a number of inlets and outlets, generally, to be able to take in a sample and to output the sample to a sample analyzer.

In the art a problem exists with calibrating the sample analyzers, since the response thereof needs to be tested in certain predefined ranges of substance concentration levels. That is, if a certain concentration of a particular chemical substance is present in a sample to be analyzed, the response of the system would require that if said concentration is varied, the peak levels of measured substances would vary accordingly. To this end it is known to provide a series of preprepared test substances to the sample loop, wherein the system performance is measured according to the concentration levels of the test substances. For a particular chemical substance, the analyzer is calibrated if the response thereof is measured according to the various concentrations of preprepared test substances which are submitted to the sample analyzer.

It is clear that this calibration procedure is complex and cumbersome. The invention has as one of its objects to provide a system wherein the need for various test substances can be dispensed with, and wherein a single test substance can be easily used to test the linearity of the sample analyzer. It is another object of the invention to provide a calibration method wherein the sample analyzer can be analyzed using a limited number of predetermined substance concentrations.

To this end, the invention provides a system according to the features of claim 1. In particular, the invention provides a sampler system for sampling a volatile substance wherein the sampler system is comprised with a dosing system for providing a predetermined adjustable dose level of sample substance in the sample container. Here, a dose level can be used in relative terms when the absolute quantity is irrelevant and the system is merely used for testing a linearity response. The dose level can then be adjusted by a scale relative to a dose unit level by varying a vacuum pressure. When an absolute quantity of the substance is required, the system can be further equipped to calculate the absolute quantity from a pressure, temperature and volume relationship.

In another aspect, the invention provides a method according to the features of claim 11, more in particular: providing a sample substance having a predetermined substance concentration in a sample container; controlling the pressure for a predetermined number of pressure levels of the sample substance in order to provide a predetermined number of dose levels of said sample substance; and inputting said predetermined number of dose levels of said sample substance in a sample analyzer for calibration purposes.

In another aspect, the dosing method according to the invention can be applied to provide a dose level of a sample substance to comply with a linearity range of a sample analyzer.

The invention will be further elucidated with reference to the figures. In the figures:
Figure 1 shows a simplified scheme of a vacuum controlled dosing system for a sample system according to the invention;
Figure 2 shows a more detailed scheme of the vacuum controlled dosing scheme according to the invention.

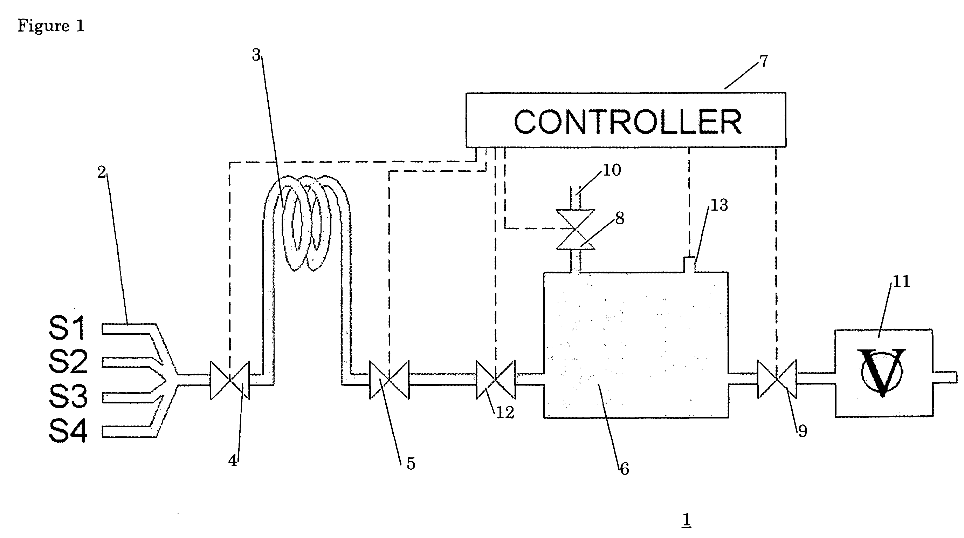

Referring to Figure 1 there is disclosed a sample system 1 comprising a plurality of inlets 2 that are connectable to a sample loop 3.

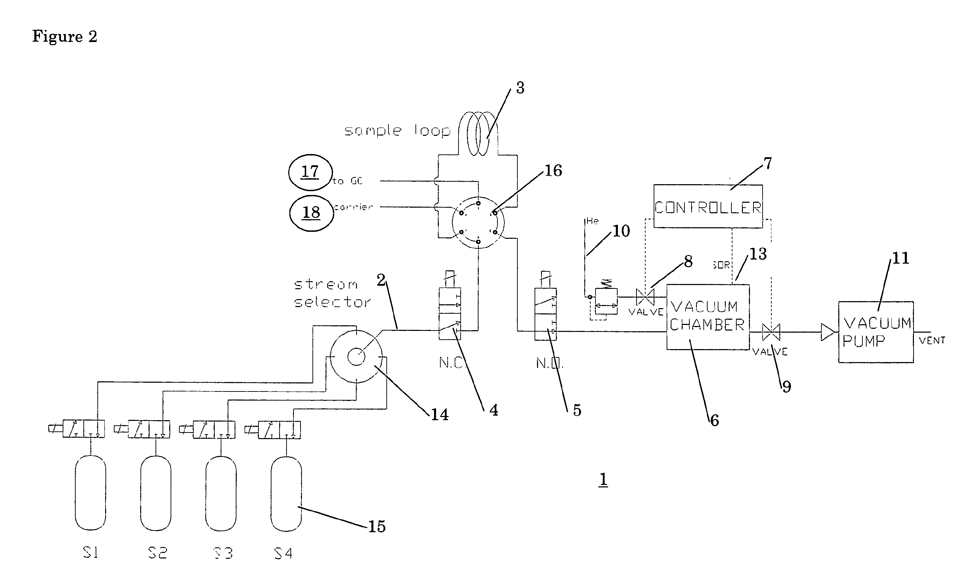

The inlets 2 can be connected to substances S1-S4 (typically, other numbers of substances are possible, including a single substance) to be sampled, or can be a connected to a plurality of inlets 2 of test sample substances of various kinds for calibrating a sample analyzer. In the figure, the sample analyzer is not shown. An exemplary connection to the sample analyzer will be elucidated further in Figure 2. The sample loop 3 is generally a small wound up tube that specifies a particular, predetermined volume which is able to receive sample substance from any of the inlets 2. The sample loop 3 is switched between two valves 4, 5, wherein valve 4 is a "normally closed" valve that normally closes the sample loop 3 from the inlets 2. At the same time, valve 5 is then open to allow the sample loop 3 to communicate with a vacuum chamber 6.

Vacuum chamber 6 is controlled by a controller system 7 which activates further valves 8 and 9 which are positioned between the vacuum chamber 6 and a pressure source 10 of an inert gas, such as He, and between a vacuum pump 11 respectively. The vacuum chamber 6 defines a relatively large volume compared to the sample loop 3 volume to provide a stabilized adjustable pressure in the sample loop 3 when the "normally open" valve 5 is opened. Typically this volume can be a factor 100 larger to be able to provide a sufficient buffering volume to maintain a preset gas pressure when the switch 5 is opened to control a preset vacuum pressure in the sample loop 3. Of course the controller 7 can be provided with calculating means which take into account leveling effects between the vacuum chamber and the sample loop 3.

The vacuum chamber 6 is further coupled to the sample loop 3 via a valve 12 which is opened when the sample system 1, in particular, the vacuum system 6 is functioning.

Referring to the vacuum chamber 6, this chamber is controlled by controller 7 to provide a predefined vacuum pressure in the sample loop 3 with an error of typically less than 1 millibar or 100 Pa. To this end the vacuum chamber 6 is coupled between vacuum pump 11 and pressure source 10. To arrive at a certain predefined vacuum setpoint, in advance, the controller controls, responsive to a pressure measured by the pressure sensor 13 a vacuum pressure in the vacuum chamber 6. In order to cope with overshoot problems when presetting a certain vacuum pressure, the vacuum chamber 6 can be (re)pressurized using valve 8 allowing an inert gas such as He gas to flow into the vacuum chamber 6. The inflow of gas is stopped when the vacuum chamber 6 is switched to the sample loop 3. Generally, diffusion of gas from the vacuum chamber 6 to the sample loop 3 must be circumvented to provide pure samples.

In practice the sample system 1 can function as follows. A certain preset vacuum is installed in vacuum chamber 6 by interplay of the valves 8 and 9 which control access and drain of the vacuum chamber 6. These valves are high speed valves which can adjust the pressure in the vacuum chamber to a very precise level.

When initially a correct pressure is installed, by opening valve 12, the vacuum is connected to the sample loop 3, which is evacuated accordingly. A number of times, the valves 4 and 5 are switched alternatingly to flush the sample loop to a certified fill level, to be sure that the substance from the inlets 2 is uniformly distributed into the sample loop 3 and the original contents of the sample loop 3 are flushed. This switching can be done by a predetermined number of switches, for instance, by switching 5 times the valves 4 and 5 synchronously. This has as an advantage that a direct communication with the vacuum chamber 6 and the inlets 2 is prevented so that the amount of sample that is taken from the inlet 2 can be controlled and is minimal.

To this end, the controller 7 provides a timing mechanism to provide a limited flow into said sample container for a predetermined time by the valves 4 and 5.

With reference to Figure 2 a more detailed view is given of the sample system 1 as disclosed in Figure 1. In particular, the sample system according to Figure 2 is provided with a stream selector 14 which can select a predetermined stream of substance, such as a gas flow of one of the containers 15 (S1-S4). For instance, the containers 15 can comprise various kinds of test substances, for example, a first container S1 can comprise a first test substance of a predetermined concentration ratio, the second container S2 can comprise a second substance of a predetermined ratio, and so on.

The stream selector 14 is coupled to the sample loop 3 via a "normally closed" valve 4 which functions as described with reference to Figure 1. The sample loop 3 is switched by rotary switch 16, alternatingly between a sample analyzer 17 (indicated as GC, Gas Chromatograph) and a carrier gas source 18 of a carrier gas (which is preferably neutral to the sample analyzer 17 for clearing the sample in the sample loop 3 into the sample analyzer 17, or between the inlets 2 and the vacuum chamber 6, via the "normally open" valve 5, for extracting a sample from any of the sample containers 15. In the position shown, the rotary switch 16 couples the sample loop between the valves 4 and 5 to fill the sample loop 3 with sample substance from any of the containers 15. The pressure of the vacuum is controlled by a Programmable Logic Controller 7. The value of the vacuum is set by a pre-run of the data-software, like ChemStation, EZChrom or by a separate program. The PLC is optionally provided with a separate web based server, which receives commands and can send return values via LAN/Ethernet. By introducing the sample at several different pressures, the sample analyzer can be calibrated for a specified component. In particular, the component can be submitted to the gas chromatograph 17 in various predefined quantities. To this end, the system further comprises a temperature sensor and a calculating circuit for calculating, based on an inputted pressure level, volume and temperature level of the sample, an absolute amount of sample substance in said sample container to be submitted to the gas chromatograph 17. For example, the linearity of the gas chromatograph can be tested by submitting a sample from the sample loop 3 which is brought at a certain pressure, and, subsequently, at certain other pressures, while keeping temperature and volume of the sample loop 3 to a constant. Accordingly, a specific amount can be submitted to the gas chromatograph 17, and the linearity can be tested by varying the specific amount and testing the response of the gas chromatograph 17.

Advantageously, by providing the dose mechanism according to the invention, substances can be tested which normally fall outside the linearity range of the sample analyzer, by diminishing or increasing the pressure of the sample loop and accordingly controlling a predetermined dose relative to the original concentration ratio. For example, if a certain substance is present in a certain concentration ratio, by sufficiently dosing the substance the amount can be controlled to fall within a predetermined linearity range. The invention is not limited to the exemplary embodiments but can also encompass variations or modifications thereto. Although the invention has been illustrated with respect to lowering a the vacuum pressure and accordingly diminishing an amount of substance in the sample loop relative to an initial amount that is received into the sample loop, a predetermined dose could also be provided by increasing the pressure in the sample loop and hence increasing the amount of substance to be tested.

## Claims

1. A sampler system for sampling a volatile substance, comprising:
- a sample container comprising: an inlet for influx of a sample of the volatile substance into the sample container; and an outlet for outflux of the sample substance from the sample container into a sample analyzer;
- a vacuum system coupled to the sample container for providing a vacuum pressure in the sample container;
- a pressure system connectable to the sampler container for conveying the sample substance to the sample analyzer; and
- a switching unit for switching the sample container alternatingly between the inlet and the vacuum system or between the pressure system and the sample analyzer;
**characterized in that**
- the sampler system is comprised with a dosing system for providing a predetermined adjustable dose level of sample substance in the sample container.

2. A sampler system according to claim 1, wherein the dosing system comprises a pressure control system that is controlled to provide a predefined pressure in the sample container.

3. A sampler system according to claim 2, wherein the pressure control system is provided with a vacuum pump, a vacuum chamber and a controller, said controller controlling said vacuum chamber to a predetermined adjustable vacuum pressure level.

4. A sampler system according to claim 1 or 2, wherein said adjustable pressure level has an error tolerance of less then about 100 Pa.

5. A sampler system according to any of the preceding claims, wherein the system further comprises a temperature sensor and a calculating circuit for calculating, based on an inputted pressure level, volume and temperature level of the sample, an absolute amount of sample substance in said sample container.

6. A sampler system according to any of the preceding claims, wherein the dosing system further comprises alternatingly openable valves, wherein a first valve is positioned between the inlet and the sample container and wherein a second valve of said pair being positioned between the sample container and the pressure control system.

7. A sampler system according to claim 6, further comprising an actuator system for actuating said valves synchronously.

8. A sample system according to claim 4, wherein said actuator system is provided with a timing mechanism to provide a limited flow into said sample container for a predetermined time.

9. A sample system according to claim 8, wherein said timing system provides a predetermined number of subsequent dose intakes by said valves that is calibrated to provide a certified fill of the sample container.

10. A sample system according to any of the preceding claims, wherein the inlet is further coupled to a stream selector for selecting a predetermined stream of substance from any of a number of substance containers which are coupled to said stream selector.

11. A method of calibrating a sample analyzer, comprising:
- providing a sample substance having a predetermined substance concentration in a sample container;
- controlling the pressure for a predetermined number of pressure levels of the sample substance in order to provide a predetermined number of dose levels of said sample substance; and
- inputting said predetermined number of dose levels of said sample substance in a sample analyzer for calibration purposes.

12. A method of testing a substance in a sample analyzer, comprising:
- providing a sample substance in a sample container;
- controlling the pressure for a predetermined number of pressure levels of the sample substance in order to provide a predetermined number of dose levels of said sample substance; and
- inputting said predetermined number of dose levels of said sample substance in a sample analyzer for providing a dose level which is compliant with a linearity response of the sample analyzer.
